# EUROPEAN PATENT SPECIFICATION

(11) **EP 2 923 820 B1**
(45) Date of publication and mention of the grant of the patent: **19.12.2018**
(21) Application number: 15160114.3
(22) Date of filing: 20.03.2015
(51) Int. Cl.: B29C 65/16, F21S 8/00, B29L 31/30

(54) **METHOD OF LASER WELDING OF AN AUTOMOTIVE LIGHT**
VERFAHREN ZUM LASERSCHWEISSEN EINER FAHRZEUGLEUCHTE
PROCÉDÉ DE SOUDAGE AU LASER D'UN PHARE DE VÉHICULE

(30) Priority: 28.03.2014 IT PD20140081
(43) Date of publication of application: 30.09.2015
(73) Proprietor: Automotive Lighting Italia S.p.A. A Socio Unico, 10078 Venaria Reale, (TO) (IT)
(72) Inventor: BOERO, Cristiano, I-10078 Venaria Reale, TORINO (IT); FERIGO, Domenico, I-10078 Venaria Reale, TORINO (IT); SCHICCHERI, Nicola, I-10078 Venaria Reale, TORINO (IT); LEONE, Fabio, I-10078 Venaria Reale, TORINO (IT); BUZZURRO, Alessandro, I-10078 Venaria Reale, TORINO (IT)
(74) Representative: Mitola, Marco

(56) References cited:
- JP-A- 2001 277 364
- US-A1- 2001 028 567
- US-A1- 2001 028 568
- US-A1- 2005 030 751
- US-A1- 2011 203 726
- US-B1- 6 592 239

## Description

### FIELD OF APPLICATION

The present invention relates to a method of laser welding of an automotive light.

### STATE OF THE ART

The term automotive light is understood to mean indifferently a rear automotive light or a front automotive light, the latter also known as a headlight.

As is known, an automotive light is a lighting and/or signalling device of a vehicle comprising at least one external automotive light having a lighting and/or signalling function towards the outside of the vehicle such as for example a sidelight, an indicator light, a brake light, a rear fog light, a reverse light, a dipped beam headlight, a main beam headlight and the like.

The automotive light, in its simplest form comprises a container body, a lenticular body and at least one light source.

The lenticular body is placed so as to close a mouth of the container body so as to form a housing chamber. The light source is arranged inside the housing chamber, which may be directed so as to emit light towards the lenticular body, when powered with electricity.

The method of manufacture of an automotive light, once the various components have been assembled, must provide for the attachment and hermetic sealing of the lenticular body to the container body.

Such sealing and attachment is usually performed by welding.

Naturally, the welding may also regard other components of a more complex automotive light, for example arranged inside the housing chamber.

A process of laser welding of polymeric bodies particularly of an automotive light makes it possible to combine a transmissive polymeric body, capable of transmitting a laser radiation, and an absorbent polymeric body, capable of absorbing the laser radiation. In the present case, the laser radiation is transformed into heat when it encounters the absorbent polymeric body which by heating locally transfers heat to the transmissive polymeric body, as far as a softening and a local melting of both polymeric bodies, which thus join firmly to each other.

The absorbent polymeric body of an automotive light may be constituted, for example, of a container body, while the transmissive polymeric body of an automotive light may be constituted, for example, by a lenticular body, which closing the container body forms a housing chamber housing a light source of the automotive headlight. Of course, the absorbent and transmissive polymeric bodies can be composed generically by further polymeric components of the automotive headlight.

The laser welding process of polymeric bodies of an automotive light sometimes has implementation difficulties because of the complex geometry of the polymeric bodies. Surface discontinuities of the transmissive polymeric body such as fittings, ribs, grooves, prominences, curvatures or the like may, for example, obstruct the flow of the laser radiation towards the welding area, which is often distant from an emission point of the laser radiation.

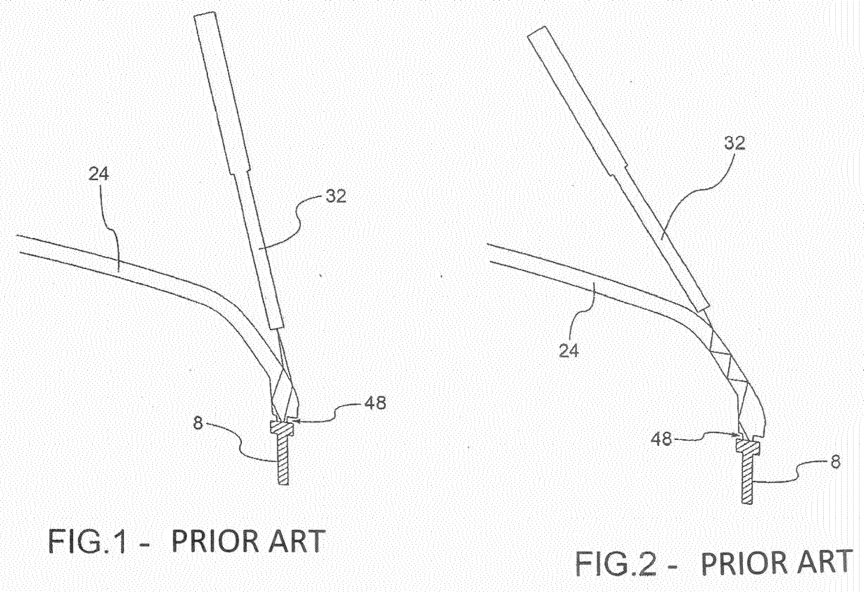

To overcome drawbacks of this kind, solutions are known of in which the use of a polymeric transmissive portion of the body is provided for, acting as guide light of the laser radiation, as described in US patent US6592239B1, or of an apparatus for simultaneous laser welding equipped with a distributor of laser radiation comprising a light guide formed of flat mirror-treated walls to focus the laser radiation. However, both of these expedients have poor performance, since only a small fraction of the laser radiation emitted by a laser emitter reaches the welding area (figures 1 and 2) .

By way of example of the first solution mentioned and with reference to figures 1 and 2, a convex-shaped lenticular body may comprise a light guide end capable of channelling the laser radiation emitted by the laser towards the welding area, using at least one reflection of the laser radiation on the inner walls of the lenticular body. However, experimental tests have shown that the laser emitter and the light guide end of the lenticular body do not cooperate in a very effective manner since only a small portion of the laser radiation emitted by the laser emitter is channelled towards the welding area. In fact, in the example illustrated, only a fraction equal to 22% of the laser radiation emitted by the laser emitter reaches the welding area with a single reflection of the laser radiation, while this fraction decreases drastically with a plurality of reflections of the laser radiation, arriving at just 2% of the laser radiation emitted by the laser emitter.

In addition, the use of a portion of the transmissive lenticular body as a light guide proves to be a poor solution also in the case in which the lenticular body has a discontinuous surface. In fact, the laser radiation may be deflected in an uncontrolled manner by the discontinuity, or the correct inclination of the laser radiation with respect to an input area of the lenticular body may be compromised in order to bypass said discontinuity, with consequent waste of laser radiation.

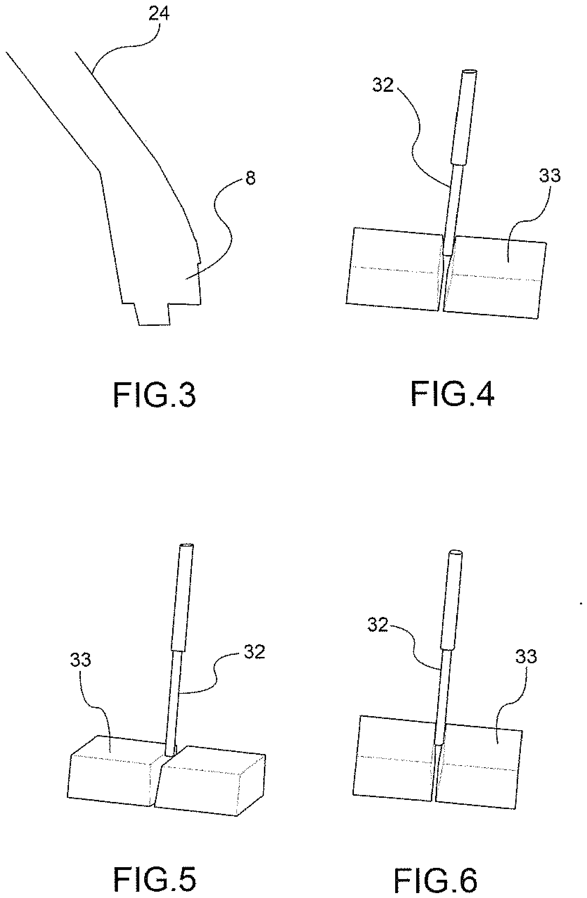

As an example of the second solution mentioned and with reference to figures 3 and 4, simulations of the welding process with the processing means have shown that the distributor of the laser radiation comprising a light guide formed of flat mirror- treated walls is not able to directly route the laser radiation emerging from an outlet of the laser radiation distributor towards the welding area in some situations, particularly if the lenticular body is a curved shape. The laser radiation distributor may, in fact, sometimes not find any location close to a face of the lenticular body, because it would physically interfere with the lenticular body.

In addition, the use of the laser radiation distributor comprising mirror-treated, flat walls proves an arguable solution even in the case in which the lenticular body presents a surface discontinuity. In fact, a substantial proportion of the laser radiation emerging from the outlet of the laser radiation distributor is deflected in an uncontrolled manner by the surface discontinuity of the lenticular body without reaching the welding area. Above cited methods are known for example from US2001/028568A1, US6592239B1, JP2001 277364A, US2011/203726A1, US2001/028567A1, US2005/030751A1.

Summarising, to date, laser welding applications in automotive lights, with the techniques currently in use, are not very efficient given that it is necessary to weld together complex geometries such as those of automotive lights.

In fact, the lenticular bodies and the container bodies of automotive lights are made of polymeric materials and comprise highly complex geometries with curved or straight coupling surfaces having highly variable inclinations along the entire perimeter of the mutual coupling.

Said complex geometry of automotive lights or their components such as the container body and the lenticular body, are ill-adapted to current laser welding techniques which are in fact optimised for applications on flat walls, simple geometries and relatively thin thicknesses of the bodies.

It follows that the laser welding techniques are currently little used on automotive lights in that they do not guarantee satisfactory results and in any case not at competitive costs/times with alternative welding techniques, such as for example vibration, ultrasound, friction welding and the like.

There is then a further peculiarity of automotive lights that complicates, further discourages and makes current laser welding techniques expensive.

In fact, a component of the automotive light, for example the lenticular body, can be crossed by light emitted by the light source so as to realize a light of the automotive light. The lenticular body can assume, therefore, a colouration, which gives the light emitted by the light source the colour required by regulations. For example, a stop light of the automotive light may be realized with a substantially white light source and a lenticular body tending to red.

However, the coloured lenticular body, for example tending to red, absorbs a lot of light energy compared to a clear lenticular body during the laser welding process, to the detriment of the light energy provided by the laser source, which must be able to provide a predetermined light energy in the welding area. The increased absorption due to the presence of a coloured lenticular body which filters, acting as the transmission element, the radiation emitted, requires the use of higher power laser beams and consequently with high consumption and welding costs.

This way the energy efficiency of the laser welding of lenticular bodies is further reduced, on the one hand absorbing, inasmuch as coloured, a significant portion of light radiation, and on the other dispersing well over half due to the aforementioned complex geometries of the lenticular bodies themselves.

In the light of all the above considerations, laser welding techniques are little used to date on automotive lights since they are too complex and expensive, as well as inconvenient to devise compared to alternative welding techniques, such as for example friction, ultrasound welding and the like.

### PRESENTATION OF THE INVENTION

The purpose of the present invention is to obtain a method of laser welding of an automotive light and an automotive light obtained using said method able to ensure a laser welding process, which makes it possible to reach the welding area with a portion of laser radiation emitted by a bigger laser emitter compared to the prior solutions.

The purpose of the invention is therefore to devise a laser welding method of polymeric bodies used in automotive lights able to reduce the power of the laser source compared to that provided by the prior art.

The purpose of the present invention is therefore to perform welding of automotive lights by means of a laser welding technique overcoming the technical drawbacks related to the specific nature of automotive lights which to date make this welding technique inconvenient and expensive.

Such purpose is achieved by a method of manufacture of an automotive light according to claim 1.

Other embodiments of the present invention are described in the dependent claims.

### DESCRIPTION OF THE DRAWINGS

Further characteristics and advantages of the present invention will be more clearly comprehensible from the description given below of its preferred and non-limiting embodiments, wherein:
- figures 1-10 show schematic views of welding solutions and methods of the prior art, from time to time referred to in the present description;

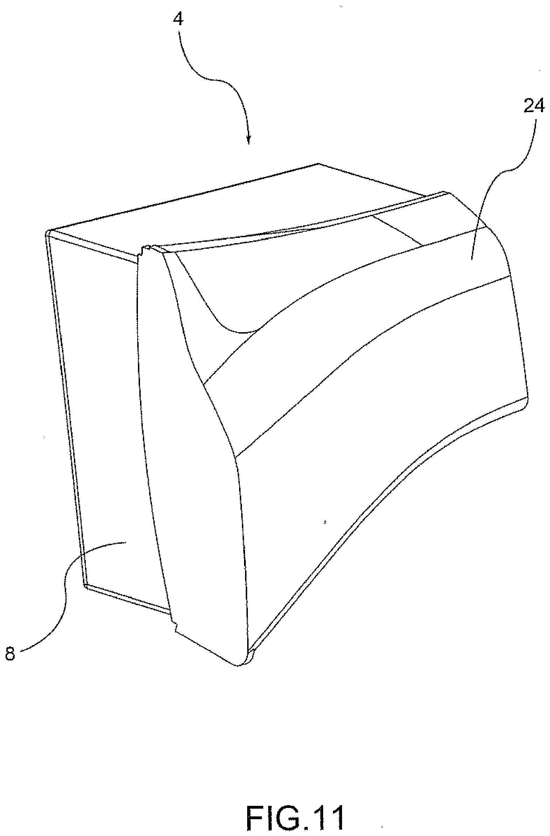

- figure 11 is a perspective view, in an assembled configuration, of an automotive light obtained by the method according to the present invention;

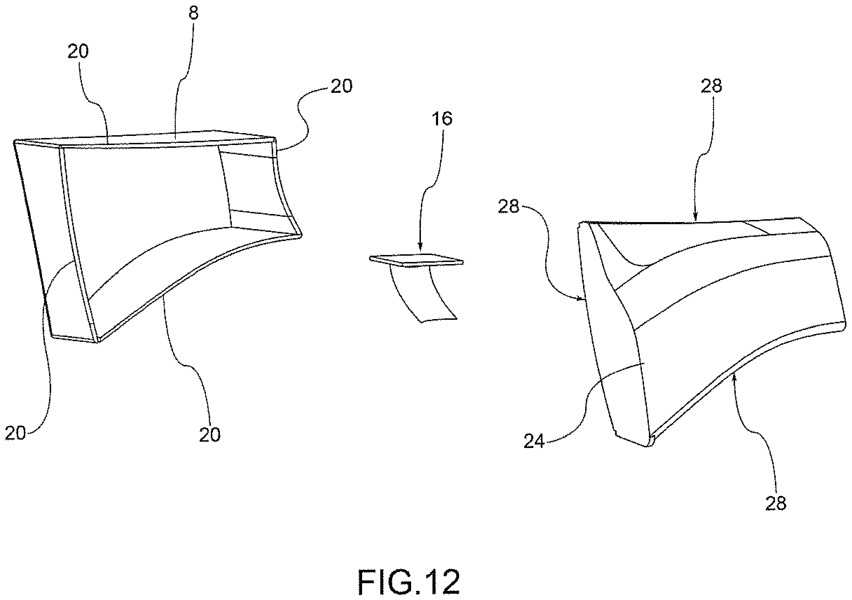

- figure 12 shows a perspective view in separate parts of the automotive light in figure 11;

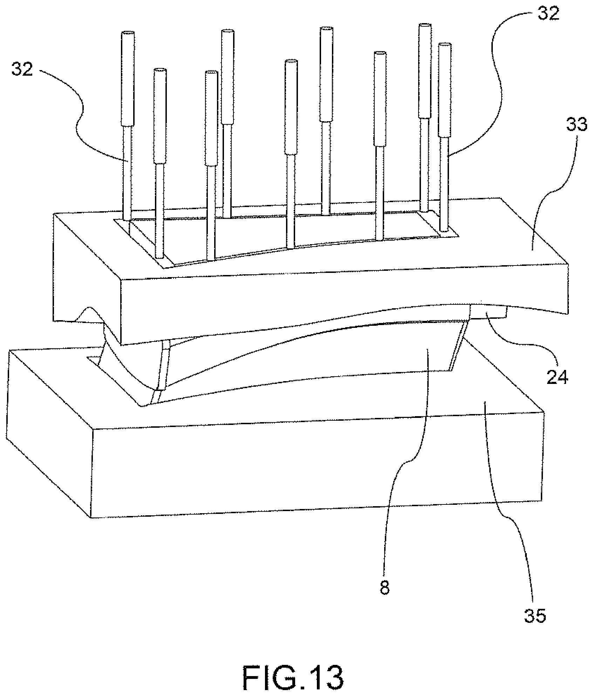

- figure 13 is a perspective view, in an assembled configuration, of a welding equipment of an automotive light for performing the method according to the present invention;

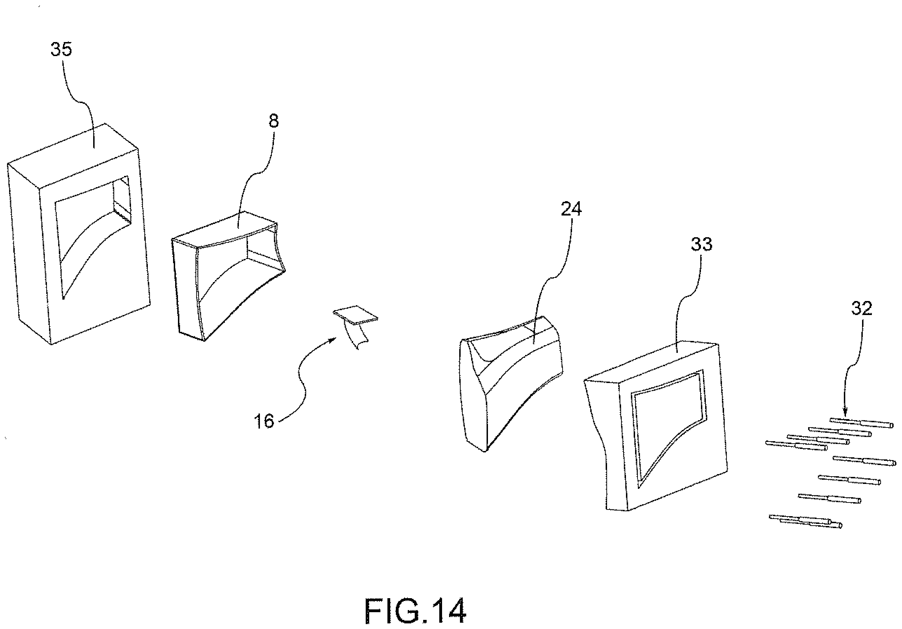

- figure 14 shows a perspective view in separate parts of the welding equipment in figure 13;
- figure 15 is a perspective view, partially in cross-section, of a welding equipment according to a further embodiment for performing the method of the present invention, in which some details have been omitted for a clearer understanding of said figure;
- figure 16 shows a partial cross-section view of the equipment in figure 15;
- figure 17 is a perspective view, partially in cross-section, of a welding equipment according to a further embodiment for performing the method of the present invention, in which some details have been omitted for a clearer understanding of said figure;
- figure 18 shows a partial cross-section view of the equipment in figure 17.

The elements or parts of elements common to the embodiments described below will be indicated using the same reference numerals.

### DETAILED DESCRIPTION

With reference to the aforementioned figures, reference numeral 4 globally denotes an automotive light, which the description which follows refers to without by so doing losing its general application.

As mentioned above, the term automotive light is understood to mean indifferently a rear automotive light or a front automotive light, the latter also known as a headlight.

As known the automotive light comprises at least one outer light of the vehicle having a lighting and/or signalling function, such as for example a sidelight, which may be a front, rear or lateral sidelight, an indicator light, a brake light, a rear fog light, a dipped beam headlight, a main beam headlight and the like.

The automotive light 4 comprises a container body 8, usually of polymeric material, which typically permits the attachment of the automotive light 4 to the relative vehicle.

For the purposes of the present invention the container body 8 may be any shape and size and may even be an element inside the automotive light, for example, not directly associated for example to the bodywork or other fastenings of the associable vehicle.

According to one embodiment, the container body 8 delimits a containment housing 12.

According to one embodiment, the containment housing 12 which houses at least one light source 16, is electrically connected to electric connection means for supplying power to the same, and is adapted to emit a light beam to propagate outside the automotive light 4.

For the purposes of the present invention the type of light source 16 used is irrelevant; for example, the light source 16 is a light source of light emitting diodes (LED).

The container body 8 is delimited by a first perimetral profile 20.

A lenticular body 24 in turn delimited by a second perimetral profile 28 is joined to the container body 8.

For the purposes of the present invention the lenticular body 24 may be either external to the automotive light 4, so as to define at least one outer wall of the automotive light directly subject to the atmosphere; for the purposes of the present invention the lenticular body may also be internal to the automotive light 4, i.e. not directly subject to the external atmosphere and in turn covered directly or indirectly by one or more screens or covering panels.

According to a possible embodiment, the lenticular body 24 is suitable to close the containment housing 12; according to one embodiment the lenticular body 24 is adapted to transmit to the outside of the automotive light 4 the light beam produced by the light source 16.

To such purpose, the lenticular body 24 is made of at least partially transparent or semi-transparent or translucent material, and may also comprise one or more opaque portions, so as to allow in any case the at least partial crossing of the light beam produced by the light source 16.

The second perimetral profile 28 is counter-shaped relative to the first perimetral profile 20 so as to be coupled with the latter according to a shaped coupling, in the assembled configuration of the automotive light 4.

The assembly of the automotive light 4 comprises the step of joining at least partially to each other the respective first and second perimetral profiles 20, 28. For example, the step is provided for of arranging the lenticular body 24 to close the containment housing 12 of the container body 8 so as to join the respective first and second perimetral profiles 20, 28,

The method of manufacture of the automotive light according to the present invention provides for joining the lenticular body and the container body to each other at said perimetral profiles 20, 28, by means of a laser welding.

For the purposes of the present invention the laser welding process may be realized with different techniques, for example, with simultaneous laser welding, almost-simultaneous laser welding, border laser welding, mask laser welding, radial laser welding, globe laser welding, etc.

In the description which follows however, specific reference will be made to simultaneous laser welding without by so doing losing its general application.

In particular, at least a laser source 30 is provided which emits a laser beam or a light beam or an electromagnetic radiation having a characteristic emission spectrum. Characteristic emission spectrum is taken to mean an electromagnetic radiation emitted substantially at a certain frequency or having a certain wavelength. According to possible embodiments, the laser source comprises a CO₂ laser, in which the laser beam is produced by a gas mixture comprising CO₂, or a YAG laser, in which the laser beam is produced by a solid state crystal, or a laser diode (LED).

The laser source 30 is associated with an optical fibre 32 inserted in a matrix/guide 33 which has the function of supporting the optical fibre 32 as well as guiding the light beam emitted by the laser source 30, through a distributor 36 of the laser radiation.

The welding preferably takes place after blocking the container body 8 in a respective attachment block 35.

As seen, during the welding step, the container body 8 acts as an absorbing member in relation to the light beam emitted by the laser source and the lenticular body 24 acts as a transmissive member of said light beam.

With reference to figures 5, 6 and 7 an apparatus for simultaneous laser welding known per se includes an emitter or laser source 30, a bundle of optical fibres 32 and a distributor of the laser radiation 36. The bundle of optical fibres 32 is connected to the laser emitter 30 so as to collect and convey a laser radiation emitted by the laser emitter 30 towards the distributor of the laser radiation 36. The bundle of optical fibres 32 branches off, then, with a plurality of optical fibres 32, each of which terminates with one end, from which a portion of the laser radiation emitted by the laser emitter 30 can be emitted.

The ends of the optical fibres are fixed to the support or matrix 33 which is provided with through holes, each of which is able to house and support one end of an optical fibre.

The distributor 36 is formed of flat, mirror-treated walls 40, for example two, and is provided with an optical axis X-X.

These walls 40 are arranged facing each other, resulting inclined specularly with respect to the optical axis X-X of the distributor so as to define a compartment 42 which starts with an input opening 44 and ends with an output opening 46.

The input opening 44 of the compartment 42 is connected to the support 33 for the optical fibres 32, so that the compartment 42 can receive the laser radiation emerging from the optical fibre 32. The outlet opening 46 of the compartment 42 constitutes an output mouth of the laser radiation distributor 36, from which the laser radiation propagated by multiple reflections inside the compartment 42 to the outside of the distributor of the laser radiation 36 comes out.

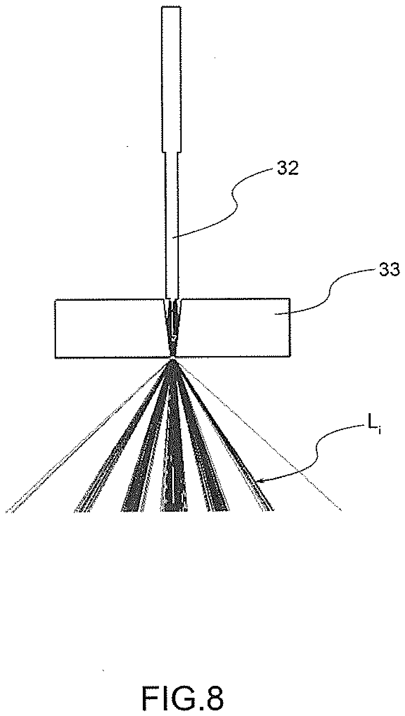

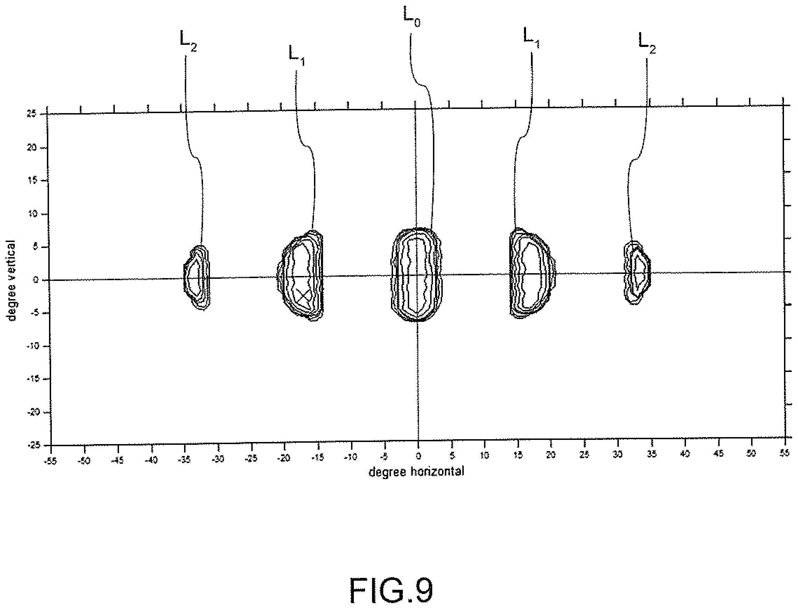

According to one embodiment, the input opening 44 of the compartment 42 extends with a greater area than that of the output opening 46 of the compartment 42, thus giving the laser radiation distributor 36 a wedge-shaped conformation. This structure of the distributor is responsible for a distribution in portions or lobes Li of the laser radiation at the output 46 of the mouth of the laser radiation distributor 36, as described in the US patent application having the publication number US2006/ 0219675 and briefly referred to in figures 8 and 9. Portion or lobe is understood to mean a portion of the laser radiation emitted.

For a description of the spatial distribution of the laser radiation referred to read the aforementioned US patent. Hereto however it is recalled that the variation of the geometry of the compartment 42 of the distributor 36, particularly of its openings 44, 46, determines the number and size of the lobes Li relative to the distribution of the laser radiation.

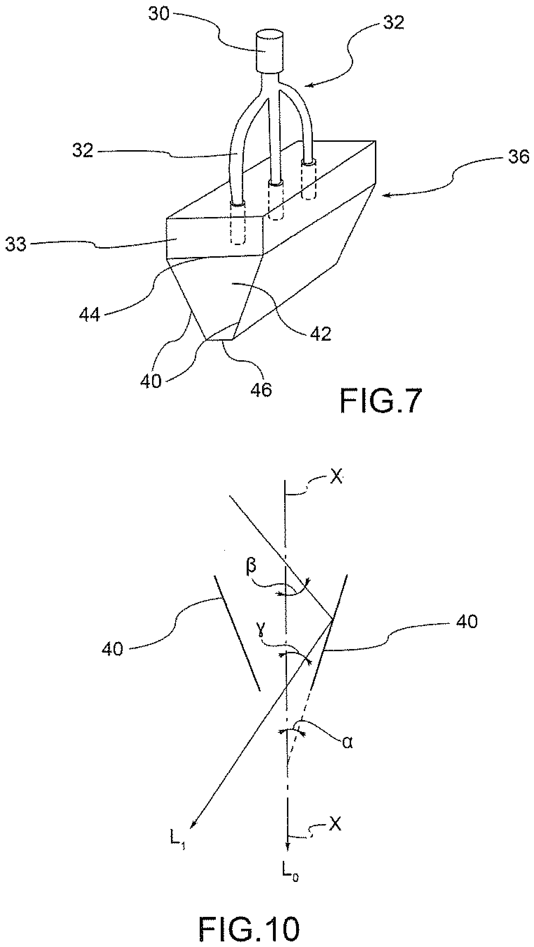

With reference to figure 10, moreover, mention is made of the fact that the zero order lobe L0 is the one having the same direction as the optical axis X-X of the distributor of the laser radiation 36 and is related to a radius of the laser radiation that does not undergo any reflection of the laser radiation inside the distributor 36, while the lobe of order one L1 is the lobe relative to a radius of the laser radiation emerging from the distributor 36 forming an angle Ψ with the optical axis of the distributor 36. This angle Ψ is determined by the relationship: Ψ = 2α + β and is relative to a radius of the laser radiation which undergoes a single reflection of the laser radiation inside the distributor 36.

An additional lobe of order two L2 relates to a radius of the laser radiation which is reflected twice inside the distributor of the laser radiation 36 and forms with the optical axis X-X of the distributor of the laser radiation 36 an angle greater than that relative to the lobe of order one L1.

The equipment for simultaneous laser welding referred to previously is used to weld elements particularly of an automotive light 4, such as for example, a lenticular body 24 and a container body 8, to which explicit reference will be made without loss of generality, wherein the lenticular body 24 acts as a transmissive polymeric body, while the container body 8 acts as an absorbent polymeric body. Said lenticular bodies 24 and the container 8 of the automotive light 4 are made, for example, of polymethylmethacrylate, polycarbonate, ABS, and the like, and extend with a complex geometry. In particular, the lenticular body 24 may have surface discontinuities. The lenticular body 24, during the welding phase, is directly facing the output opening 46 of the distributor of laser radiation 36.

The welding method according to the present invention will now be described in detail.

In particular, the container body 8 delimited by the first perimeter profile 20 is prepared, the lenticular body 24 delimited by a second perimetral profile 28 is prepared, associating at least partially with each other the respective first and second perimetral profiles 20, 28 of the container body 8 and of the lenticular body 24, so that the contact surface between said perimetral profiles defines a welding interface 48.

At least one laser emission device 30 (for example a light emitting diode or LED) emitting a light beam or radiation having a characteristic emission spectrum is further provided.

The emission device 30 is operatively connected to a first light guide 52 or distributor device of the emitted light radiation, said first light guide comprising an input 56 and an output 60 of the light radiation, so as to distribute the radiation from said output 60 according to a spatial distribution comprising a plurality of portions or lobes Li.

For example said first light guide 52 is connected to the support 33 for the optical fibres 32.

Advantageously the method according to the present invention further comprises the step of providing a second light guide 64 or light guide portion inside the lenticular body 24 adapted to obtain a light guide of the light radiation which propagates itself inside the lenticular body 24.

Said second light guide 64 of the lenticular body 24 is provided with walls able to satisfy the overall internal reflection condition for at least one portion of the laser radiation defined by the at least one first lobe Li.

Advantageously, the first and the second light guides 52,64 are suitably arranged with each other so as to route at least the first lobe or portion Li of the laser radiation coming from the output 60 of the first light guide 52 towards the second light guide 64 of the lenticular body 24, so as to propagate the at least one portion of the laser radiation inside the second light guide 64 towards the welding interface 48.

As seen, the container body 8 acts as an absorbing member in relation to the light beam and the lenticular body 24 acts as a transmissive member of the light beam. This way, the light beam reaching the welding interface 48 is able to soften and weld together the perimetral profiles 20, 28 respectively of the container body 8 and of the lenticular body 24.

According to a possible embodiment, the method comprises the step of routing at least one further portion or second lobe L2 of the laser radiation coming from the output 60 of the first light guide 52, towards the second light guide 64 of the lenticular body 24, so as to follow an alternative path as compared to the first portion of the laser radiation relating to the first lobe Li, wherein the second lobe L2 impacts on the welding surface 48.

According to one embodiment, the light beam distributed at the output 60 of the first light guide 52 comprises a plurality of lobes Li, routed towards the second light guide 64 of the lenticular body 24, said lobes having an 'n' level, where 'n' is number of reflections affecting the lobe by passing through the second light guide 64 of the lenticular body 24 before impacting on the welding surface 48.

According to one embodiment, the method comprises the step of manufacturing at least one lobe '0' which impacts on the welding surface 48 passing through the lenticular body 24 without undergoing reflections inside the second light guide 64.

According to one embodiment, the method comprises the step of manufacturing at least two lobes Li of different levels, which impact on the weld interface 48 passing through the lenticular body 24 undergoing a different number of reflections inside the second light guide 64.

According to a possible embodiment, the first light guide 52 and the second light guide 64 of the lenticular body 24 are aligned in the same direction.

According to a possible further embodiment, the first light guide 52 and the second light guide 64 of the lenticular body 24 are oriented so as to be inclined with each other according to a first and a second direction X-X, Y-Y, in order to bypass surface discontinuities of the lenticular body 24.

The first light guide 52 according to the present invention may be realised according to some variants.

For example, the first light guide 52 may comprise at least a pair of walls 68 facing each other and mirror-wise inclined relative to an optical axis X-X of the first light guide 52, so as to define a compartment 42 starting with the input 56 and ending with said output 60 for the propagation of the light beam in lobes Li.

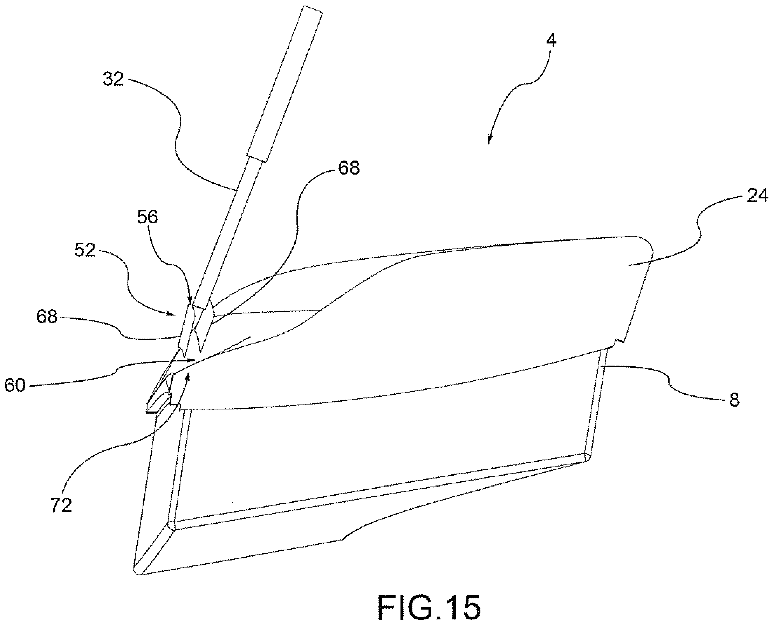

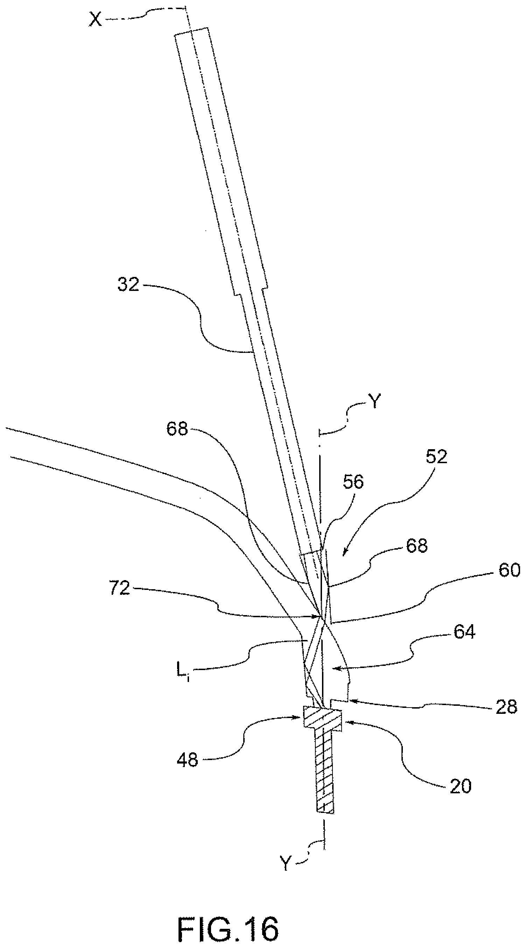

For example said compartment 42 may be hollow and said walls 68 may be reflective of the light beam incident on them (figures 15-16).

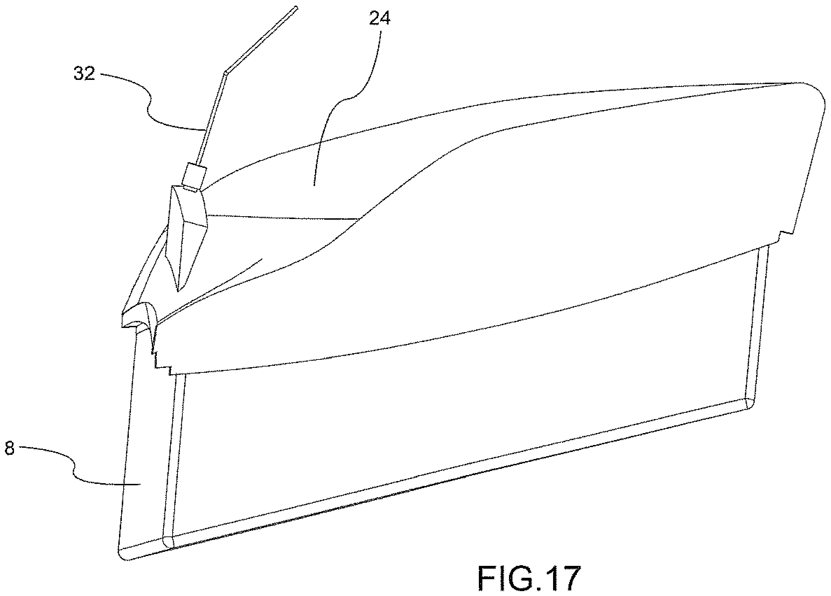

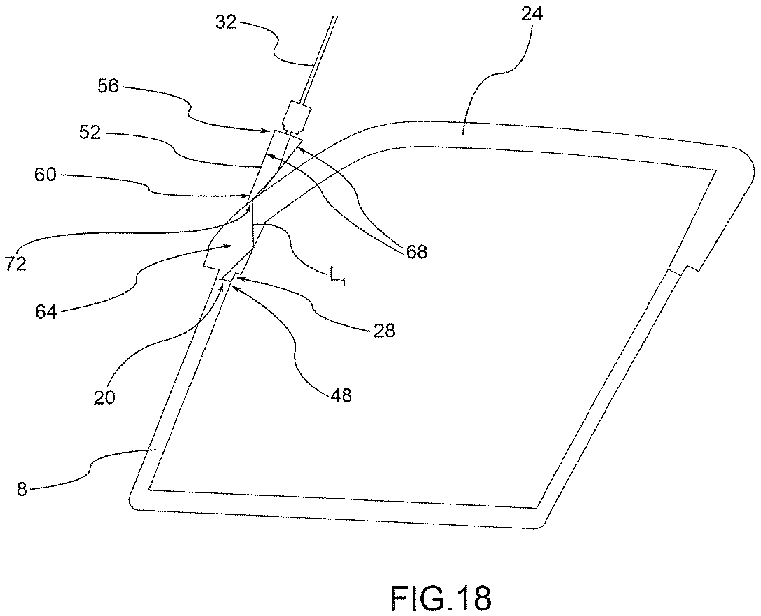

According to a further embodiment, the first light guide 52 comprises a solid body suitable to satisfy the overall internal reflection condition for the at least one portion or lobe Li of the laser radiation, the solid body 56 extending from said input to said output 60 (figures 17-18).

For example, the first light guide 52 is shaped and placed so as to arrange the output 60 in the proximity of and/or substantially in contact with the lenticular body 24.

According to one embodiment, said output 60 is at least partially counter-shaped relative to the corresponding portion of the lenticular body 24 which it is arranged in proximity and/or substantially in contact with.

A possible method for defining the mutual orientation between the first and the second light guide 52, 64 will now be described

In particular the mutual orientation between the first light guide 52 and the second light guide 64 of the lenticular body 24 is determined by following backwards the path of a beam of laser radiation belonging to a determined lobe Li of the spatial distribution intended for propagation inside the second light guide 64 of the lenticular body 24.

For example, such mutual orientation is obtained starting from the welding interface 48, according to the following steps of:

- back-tracing the path of the beam of laser radiation of the lobe Li of the spatial distribution intended to be propagated until finding a first wall of the second light guide 64, wherein the condition of overall internal reflection of the beam of laser radiation itself may be met,

- determining the beam reflected by the wall found meeting the overall internal reflection, until meeting an input area 72 of the laser radiation, which extends on a first face of the lenticular body 64 directly facing the associable first light guide 52.

The aforementioned back-tracing procedure can be reiterated to identify possible additional walls of the second light guide 64, separate from said first wall.

Moreover, according to one embodiment, the back-tracing procedure comprises the step of back-calculating the refraction the beam of laser radiation undergoes when the material from which the lenticular body 64 is made passes through air, so as to identify the direction of the beam of laser radiation coming from the output 60 of the first light guide 52 of the laser radiation.

Such direction determines the positioning of the first light guide 52 with regard to the lenticular body 24, for example, placing the axis of the first light guide 52 of the laser radiation with a same direction as that of the beam of laser radiation back-calculated at the output of the second light guide 64.

The calculation of the mutual orientation may also provide for the step of estimating a possible deviation affecting the beam of laser radiation due to any surface discontinuity of the lenticular body 24, and/or the step of estimating the overriding of such a discontinuity, again for determining the exact direction of the beam of laser radiation.

As described above, the laser welding step may be performed by one or more optical fibres 32 which simultaneously emit respective light radiation on separate, predetermined portions of said perimetral profiles 20, 28, according to a 'simultaneous' welding technique.

It is also possible to weld the automotive light 4 using at least one mobile laser source which is guided so as to direct the light radiation along said perimetral profiles 20, 28, according to a 'contour' welding technique.

In addition, as seen, the laser welding process may be realized with different techniques such as for example, with simultaneous laser welding, almost-simultaneous laser welding, border laser welding, mask laser welding, radial laser welding, globe laser welding.

As may be appreciated from the description, the manufacturing method according to the invention makes it possible to overcome the drawbacks of the prior art.

In particular, thanks to the method of the present invention it is possible to apply the technique of laser welding to automotive lights having any type of complex geometry, having curvatures and thicknesses highly variable along the perimeter of the light.

The laser welding technique according to the present invention is not only not inconvenient compared to alternative welding techniques of the prior art but may even be better both in terms of cost and time, for the same quality of the welding joint, compared to the solutions of the prior art in the field of automotive lights.

In particular, there is a reduction of consumption and therefore of costs since a greater part of the light beam can be transmitted to the welding interface between the lenticular body and the container body.

The light beam on the interface portion of welding between the lenticular body and the container body is thus suitable to obtain a welded joint having excellent mechanical qualities, without waste of luminous power.

Furthermore, the laser welding step, regardless of the technique used to perform it, for example of the 'contour' or 'simultaneous' type, is quick and reliable, allowing a further reduction of assembly costs for the same quality of the joint compared to the prior art.

Experimental tests have shown that the efficiency of the laser welding system using the method of the invention is improved compared to the prior art, in the case of a lenticular body which extends convexly. In fact, with reference to the same example mentioned above in relation to the prior art, a fraction of 31% of the radiation emerging from the output of the light guide of the laser radiation distributor is able to reach the welding area. Moreover, by providing a light guide portion which cooperates with the light guide of the distributor of the laser radiation it is possible to control more efficiently the laser radiation intended for the welding area with respect to the teaching of the prior art, especially in the laser welding of lenticular bodies having surface discontinuities. In the present case, at least one lobe of the laser radiation distribution at the output of the mouth of the laser radiation distributor may be able to bypass a possible surface discontinuity of the lenticular body, since it can reach its destination conveyed in the light guide portion of the lenticular body.

An automotive light obtained by the method according to the invention comprises a container body closed by a lenticular body, so as to form a housing chamber housing a light source adapted to emit light when supplied with electrical energy. The lenticular and container bodies are of polymeric nature. The lenticular body extends with a complex geometry including a portion adapted to act as a light guide for a light radiation, in particular laser. Such automotive headlight is made by the method just described.

Obviously, the present invention is susceptible to numerous embodiments or variants while remaining within the sphere of protection as defined by the appended claims. For example, the laser welding procedure may be implemented with a different technique, for example, with border laser welding. In this case, the distributor of the laser radiation may be replaced with a light guide made of polymeric material, such as polymethylmethacrylate, polycarbonate, ABS, or the like, able to receive and propagate within it a laser radiation emitted by a laser emitter.

Such light guide has a wedge-shape, so as to impart to the laser radiation in output therefrom a distribution in lobes, wherein at least one of them is intended to penetrate and be propagated inside a light guide portion of the lenticular body to reach the welding area.

A person skilled in the art may make numerous modifications and variations to the methods of manufacture of automotive lights described above so as to satisfy contingent and specific requirements while remaining within the sphere of protection of the invention as defined by the following claims.

## Claims

1. A method of manufacture of an automotive light (4) comprising the steps of:
- providing a container body (8) delimited by a first perimetral profile (20),
- providing a lenticular body (24) delimited by a second perimetral profile (28),
associating at least partially with each other the respective first and second perimetral profiles (20,28) of the container body (8) and the lenticular body (24), the contact surface between said perimetral profiles defining a welding interface (48),
- providing at least one laser emission device (30) emitting a light beam or radiation having a characteristic emission spectrum,
- wherein the emission device (30) is operatively connected to a first light guide (52) of the emitted light radiation,
- providing a second light guide (64) inside the lenticular body (24) adapted to obtaining a light guide of the light radiation inside the lenticular body (24),
- suitably arranging with each other the first and the second light guide (52,64) so as to route at least a first lobe or portion (L1) of the laser radiation coming from the output (60) of the first light guide (52) towards the second light guide (64) of the lenticular body (24), so as to propagate at least one portion or lobe of the laser radiation (Li) inside the second light guide (64) towards the welding interface (48),
- wherein the container body (8) acts as an absorbing member in relation to the light beam and the lenticular body (24) acts as a transmissive member of the light beam **characterised in that**:
said first light guide (52) comprises an input (56) and an output (60) of the light radiation, so as to distribute the radiation from that output (60) according to a spatial distribution comprising a plurality of portions or lobes (Li),
- wherein the second light guide (64) is provided with walls capable of satisfying the overall internal reflection condition for at least one portion of the laser radiation defined by at least one first lobe or portion (Li).

2. A method of manufacture of an automotive light (4) according to claim 1, wherein the method comprises the step of routing at least one further portion or second lobe (L2) of the laser radiation coming from the output (60) of the first light guide (52), towards the second light guide (64) of the lenticular body (24), so as to follow an alternative path as compared to the first portion (L1) of the laser radiation relating to the first lobe (L1), wherein the second lobe (L2) impacts on the welding surface (48).

3. A method of manufacture of an automotive light (4) according to claim 1 or 2, wherein the light beam distributed at the output (60) of the first light guide (52) comprises a plurality of lobes (Li), routed towards the second light guide (64) of the lenticular body (24), said lobes (Ln) having an 'n' level, where 'n' is number of reflections affecting the lobe by passing through the second light guide (64) of the lenticular body (24) before impacting on the welding surface (48).

4. A method of manufacture of an automotive light (4) according to claim 1, 2 or 3, wherein the method comprises the step of manufacturing at least one lobe (L0) having a '0' level which impacts on the welding surface (24) by passing through the lenticular body (24) without undergoing reflections inside the second light guide (64).

5. A method of manufacture of an automotive light (4) according to claim 3 or 4, wherein the method comprises the step of manufacturing at least two lobes (L0) having different levels, which impact on the welding surface (24) by passing through the lenticular body (24) undergoing a different number of reflections inside the second light guide (64).

6. A method of manufacture of an automotive light (4) according to any one of the preceding claims, wherein the first light guide (52) and the second light guide (64) are aligned along an identical direction (X-X).

7. A method of manufacture of an automotive light (4) according to any of claims from 1 to 5, wherein the first light guide (52) and the second light guide (64) of the lenticular body (24) are oriented so as to be inclined relative to each other according to a first and a second direction (X-X,Y-Y).

8. A method of manufacture of an automotive light (4) according to any one of the preceding claims, wherein the laser emission device (30) is connected to the first light guide (52) by means of an optical fibre beam (32), said optical fibres (32) being secured to a support or matrix (33).

9. A method of manufacture of an automotive light (4) according to any one of the preceding claims, wherein the first light guide (52) comprises at least a pair of walls (68) facing each other and mirror-wise inclined relative to an optical axis (X-X) of the first light guide (52), so as to define a compartment (42) starting with the input (56) and ending with said output (60) for the propagation of the light beam in lobes (Li).

10. A method of manufacture of an automotive light (4) according to claim 9, wherein said compartment (42) is hollow and said walls (68) are reflecting relative to the light beam that impacts on them.

11. A method of manufacture of an automotive light (4) according to any one of claims from 1 to 8, wherein the first light guide (52) comprises a solid body adapted to meet the condition of overall internal reflection for the at least one portion of the laser radiation (Li), with the solid body extending from said input (56) to said output (60).

12. A method of manufacture of an automotive light (4) according to any one of the preceding claims, wherein the first light guide (52) is shaped and placed so as to arrange an output (60) in the proximity of and/or substantially contacting the lenticular body (24).

13. A method of manufacture of an automotive light (4) according to any one of the preceding claims, wherein said output (60) is at least partially counter-shaped relative to the corresponding portion of the lenticular body (24) to which it is arranged in the proximity and/or substantially in contact.

14. A method of manufacture of an automotive light (4) according to any one of the preceding claims, wherein the mutual orientation between the first light guide (52) of the laser radiation and the second light guide (64) of the lenticular body (24) is determined by following backwards the path of a beam of laser radiation belonging to a determined lobe (Li) of the spatial distribution intended for propagation inside the second light guide (64) of the lenticular body (24).

15. A method of manufacture of an automotive light (4) according to claim 14, wherein said mutual orientation is obtained starting from the welding interface (48), according to the following steps of:
- back-tracing the path of the beam of laser radiation of the lobe (Li) of the spatial distribution intended to be propagated until finding a first wall of the second light guide (64), wherein the condition of overall internal reflection of the beam of laser radiation itself may be met,
- determining the beam reflected by the wall found meeting the overall internal reflection, until meeting an input area (72) of the laser radiation, which extends on a first face of the lenticular body (24) directly facing the associable first light guide (52).

16. A method of manufacture of an automotive light (4) according to any one of claims from 14 to 15, wherein said method further comprises the steps of:
- back-calculating the refraction the beam of laser radiation undergoes when the material from which the lenticular body (24) is made passes through air, so as to identify the direction of the beam of laser radiation coming from the output of the first light guide (52),
- wherein such direction determines the positioning of the first light guide (52) with regard to lenticular body (24), placing the axis (X-X) of the first light guide (52) with a same direction as that of the beam of laser radiation back-calculated at the output of the second light guide (64).

17. A method of manufacture of an automotive light (4) according to any one of claims from 14 to 16, wherein the calculation of the mutual orientation provides for the step of estimating a possible deviation affecting the beam of laser radiation due to any surface discontinuity of the lenticular body (24), and/or the step of estimating the overriding of such a discontinuity, again for determining the exact direction of the beam of laser radiation.

## Patentansprüche

1. Verfahren zur Herstellung einer Kraftfahrzeugleuchte (4), folgende Schritte umfassend:
- Bereitstellen eines Behälterkörpers (8), der durch ein erstes Umfangsprofil (20) begrenzt
ist;
- Bereitstellen eines linsenförmigen Körpers (24), der durch ein zweites Umfangsprofil (28) begrenzt ist;
- mindestens teilweises Verbinden des jeweiligen ersten und zweiten Umfangsprofils (20, 29) des Behälterkörpers (8) und des linsenförmigen Körpers (24), wobei die Kontaktfläche zwischen diesen Umfangsprofilen eine Schweißfläche (48) definiert;
- Bereitstellen mindestens einer Laseremissionsvorrichtung (30), die einen Laserstrahl oder Laserstrahlung emittiert, die ein charakteristisches Emissionsspektrum aufweist,
wobei die Emissionsvorrichtung (30) mit einem ersten Lichtleiter (52) der emittierten Laserstrahlung wirkverbunden ist.
- Bereitstellen eines zweiten Lichtleiters (64) im Innern des linsenförmigen Körpers (24), der dazu bestimmt ist, einen Lichtleiter der Laserstrahlung im Innern des linsenförmigen Körpers (24) zu empfangen;
- zweckmäßiges Anordnen des ersten und des zweiten Lichtleiters (52, 64), so dass mindestens eine erste Strahlungskeule oder ein Teil (L1) der aus dem Austritt (60) des ersten Lichtleiters (52) austretenden Laserstrahlung in Richtung des zweiten Lichtleiters (64) des linsenförmigen Körpers (24) gelenkt wird, so dass sich mindestens ein Teil oder eine Strahlungskeule der Laserstrahlung (Li) im Innern des zweiten Lichtleiters (64) in Richtung der Schweißfläche (48) ausbreitet,
wobei der Behälterkörper (8) in Bezug auf den Laserstrahl als absorbierendes Element wirkt und der linsenförmige Körper (24) als durchlässiges Element des Laserstrahls wirkt, **dadurch gekennzeichnet, dass**:
der erste Lichtleiter (52) einen Eintritt (56) und einen Austritt (60) der Laserstrahlung umfasst, so dass die Strahlung von dem Austritt (60) entsprechend einer eine Vielzahl von Teilen oder Strahlungskeulen (Li) umfassenden räumlichen Verteilung verteilt wird,
wobei der zweite Lichtleiter (64) mit Wänden versehen ist, die in der Lage sind, die innere Gesamtreflexionsbedingung für mindestens einen Teil der Laserstrahlung zu erfüllen, die mindestens durch eine erste Strahlungskeule oder einen Teil (Li) definiert wird.

2. Verfahren zur Herstellung einer Kraftfahrzeugleuchte (4) nach Anspruch 1, wobei das Verfahren den Schritt umfasst, in dem mindestens ein weiterer Teil oder eine zweite Strahlungskeule (L2) der aus dem Austritt (60) des ersten Lichtleiters (52) austretenden Laserstrahlung in Richtung des zweiten Lichtleiters (64) des linsenförmigen Körpers (24) gelenkt wird, um im Vergleich zu dem ersten Teil (L1) der die erste Strahlungskeule (L1) betreffenden Laserstrahlung einem alternativen Weg zu folgen, wobei die zweite Strahlungskeule (L2) auf die Schweißfläche (48) auftrifft.

3. Verfahren zur Herstellung einer Kraftfahrzeugleuchte (4) nach Anspruch 1 oder 2, wobei der am Austritt (60) des ersten Lichtleiters (52) verteilte Lichtstrahl eine Vielzahl von Strahlungskeulen (Li) umfasst, die in Richtung des zweiten Lichtleiters (64) des linsenförmigen Körpers (24) gelenkt werden, wobei die Strahlungskeulen (Ln) einen, n'-Wert aufweisen, wobei, n' die Anzahl der Reflexionen ist die auf die Strahlungskeule einwirken, indem sie durch den zweiten Lichtleiter (64) des linsenförmigen Körpers (24) hindurchgehen, bevor sie sie auf die Schweißfläche (48) auftreffen.

4. Verfahren zur Herstellung einer Kraftfahrzeugleuchte (4) nach Anspruch 1, 2 oder 3, wobei das Verfahren den Schritt umfasst, in dem mindestens eine Strahlungskeule (L0) mit einem ,0'-Wert hergestellt wird, die auf die Schweißfläche (24) auftrifft, indem sie durch den linsenförmigen Körper (24) hindurchgeht, ohne im Innern des zweiten Lichtleiters (64) Reflexionen ausgesetzt zu sein.

5. Verfahren zur Herstellung einer Kraftfahrzeugleuchte (4) nach Anspruch 3 oder 4, wobei das Verfahren den Schritt umfasst, in dem mindestens zwei Strahlungskeulen (L0) mit unterschiedlichen Werten hergestellt werden, die auf die Schweißfläche (24) auftreffen, indem sie durch den linsenförmigen Körper (24) hindurchgehen und im Innern des zweiten Lichtleiters (64) einer unterschiedlichen Anzahl von Reflexionen ausgesetzt sind.

6. Verfahren zur Herstellung einer Kraftfahrzeugleuchte (4) nach einem der vorstehenden Ansprüche, wobei der erste Lichtleiter (52) und der zweite Lichtleiter (64) entlang der gleichen Richtung (X-X) ausgerichtet sind.

7. Verfahren zur Herstellung einer Kraftfahrzeugleuchte (4) nach einem der Ansprüche 1 bis 5, wobei der erste Lichtleiter (52) und der zweite Lichtleiter (64) des linsenförmigen Körpers (24) so ausgerichtet sind, dass sie entsprechend einer ersten und einer zweiten Richtung (X-X, Y-Y) zueinander geneigt sind.

8. Verfahren zur Herstellung einer Kraftfahrzeugleuchte (4) nach einem der vorstehenden Ansprüche, wobei die Laseremissionsvorrichtung (30) mittels einer Lichtleitfaser (32) mit dem ersten Lichtleiter (52) verbunden ist, wobei die Lichtleitfasern (32) an einem Träger oder einer Matrix (33) gesichert sind.

9. Verfahren zur Herstellung einer Kraftfahrzeugleuchte (4) nach einem der vorstehenden Ansprüche, wobei der erste Lichtleiter (52) mindestens ein Paar Wände (68) umfasst, die einander zugewandt und in Bezug auf eine optische Achse (X-X) des ersten Lichtleiters (52) spiegelbildlich geneigt sind, so dass sie eine Abteilung (42) bilden, die zur Ausbreitung des Lichtstrahls in Strahlungskeulen (Li) mit dem Eintritt (56) beginnt und mit dem Austritt (60) endet.

10. Verfahren zur Herstellung einer Kraftfahrzeugleuchte (4) nach Anspruch 9, wobei die Abteilung (42) hohl ist und die Wände (68) in Bezug auf den auf sie treffenden Lichtstrahl reflektierend.

11. Verfahren zur Herstellung einer Kraftfahrzeugleuchte (4) nach einem der Ansprüche 1 bis 8, wobei der erste Lichtleiter (52) einen Festkörper umfasst, der die innere Gesamtreflexionsbedingung für den mindestens einen Teil der Laserstrahlung (Li) erfüllt, wobei sich der Festkörper von dem Eintritt (56) zu dem Austritt (60) erstreckt.

12. Verfahren zur Herstellung einer Kraftfahrzeugleuchte (4) nach einem der vorstehenden Ansprüche, wobei der erste Lichtleiter (52) so geformt und angeordnet ist, dass er in der Nähe und/oder im Wesentlichen in Kontakt mit dem linsenförmigen Körper (24) einen Austritt (60) bildet.

13. Verfahren zur Herstellung einer Kraftfahrzeugleuchte (4) nach einem der vorstehenden Ansprüche, wobei der Austritt (60) in Bezug auf den entsprechenden Abschnitt des linsenförmigen Körpers (24), in dessen Nähe er angeordnet ist und/oder mit dem er im Wesentlichen Kontakt hat, mindestens teilweise gegengeformt ist.

14. Verfahren zur Herstellung einer Kraftfahrzeugleuchte (4) nach einem der vorstehenden Ansprüche, wobei die gemeinsame Ausrichtung zwischen dem ersten Lichtleiter (52) der Laserstrahlung und dem zweiten Lichtleiter (64) des linsenförmigen Körpers (24) bestimmt wird, indem dem Weg eines Strahls der Laserstrahlung, der zu einer bestimmten Strahlungskeule (Li) der räumlichen Verteilung gehört, welche zur Ausbreitung im Innern des zweiten Lichtleiters (64) des linsenförmigen Körpers (24) bestimmt ist, rückwärts gefolgt wird.

15. Verfahren zur Herstellung einer Kraftfahrzeugleuchte (4) nach Anspruch 14, wobei die gemeinsame Ausrichtung, beginnend von der Schweißfläche (48), in folgenden Schritten bestimmt wird:
- Rückverfolgen des Weges des Strahls der Laserstrahlung der Strahlungskeule (Li) der räumlichen Verteilung, die zur Ausbreitung bestimmt ist, bis eine erste Wand des zweiten Lichtleiters (64) gefunden wird, wobei die innere Gesamtreflexionsbedingung des Strahls der Laserstrahlung selbst erfüllt sein kann,
- Bestimmen des Strahls, der von der gefundenen Wand reflektiert wird und die innere Gesamtreflexion erfüllt, bis eine Eintrittsfläche (72) der Laserstrahlung gefunden ist, die sich an einer ersten Seite des linsenförmigen Körpers (24), dem zugehörigen ersten Lichtleiter (52) direkt gegenüberliegend, erstreckt.

16. Verfahren zur Herstellung einer Kraftfahrzeugleuchte (4) nach einem der Ansprüche 14 bis 15, wobei das Verfahren zudem folgende Schritte umfasst:
- Rückberechnen der Brechung, die der Strahl der Laserstrahlung ausgesetzt ist, wenn das Material, aus dem der linsenförmige Körper (24) hergestellt ist, durch Luft hindurchgeht, um die Richtung des Strahls der Laserstrahlung zu bestimmen, der aus dem Austritt des ersten Lichtleiters (52) austritt,
- wobei diese Richtung die Anordnung des ersten Lichtleiters (52) in Bezug auf den linsenförmigen Körper (24) bestimmt, Anordnen der Achse (X-X) des ersten Lichtleiters (52), der die gleiche Richtung aufweist wie der rückberechnete Strahl der Laserstrahlung, am Austritt des zweiten Lichtleiters (64).

17. Verfahren zur Herstellung einer Kraftfahrzeugleuchte (4) nach einem der Ansprüche 14 bis 16, wobei die Berechnung der gemeinsamen Ausrichtung den Schritt ermöglicht, eine mögliche Abweichung zu schätzen, die den Strahl der Laserstrahlung aufgrund einer Oberflächenunregelmäßigkeit des linsenförmigen Körpers (24) beeinflusst, und/oder den Schritt, die Überwindung dieser Unregelmäßigkeit abzuschätzen, um erneut die genaue Richtung des Strahls der Laserstrahlung zu bestimmen.

## Revendications

1. Procédé de fabrication d'un phare de véhicule (4) comprenant les étapes suivantes :
- fournir un corps de conteneur (8) délimité par un premier profil périmétrique (20),
- fournir un corps lenticulaire (24) délimité par un second profil périmétrique (28),
associant au moins partiellement l'un avec l'autre les premier et second profils périmétriques respectifs (20, 28) du corps de conteneur (8) et du corps lenticulaire (24), la surface de contact entre lesdits profils périmétriques définissant une interface de soudage (48),
- fournir au moins un dispositif d'émission laser (30) émettant un faisceau ou un rayonnement de lumière ayant un spectre d'émission caractéristique,
- dans lequel le dispositif d'émission (30) est connecté de manière opérationnelle à un premier guide de lumière (52) du rayonnement de lumière émis,
- fournir un second guide de lumière (64) à l'intérieur du corps lenticulaire (24) adapté pour obtenir un guide de lumière du rayonnement de lumière à l'intérieur du corps lenticulaire (24),
- disposer de manière appropriée l'un avec l'autre le premier et le second guide de lumière (52, 64) de façon à acheminer au moins un premier lobe ou une première partie (L1) du rayonnement laser venant de la sortie (60) du premier guide de lumière (52) vers le second guide de lumière (64) du corps lenticulaire (24), de façon à propager au moins une partie ou un lobe du rayonnement laser (Li) à l'intérieur du second guide de lumière (64) vers l'interface de soudage (48),
- dans lequel le corps de contenant (8) agit en tant qu'élément absorbant par rapport au faisceau de lumière et le corps lenticulaire (24) agit en tant qu'élément transmissif du faisceau de lumière **caractérisé en ce que** :
ledit premier guide de lumière (52) comprend une entrée (56) et une sortie (60) du rayonnement de lumière, de façon à distribuer le rayonnement à partir de cette sortie (60) selon une distribution spatiale comprenant une pluralité de parties ou de lobes (Li),
- dans lequel le second guide de lumière (64) est doté de parois capables de satisfaire la condition de réflexion interne globale pour au moins une partie du rayonnement laser définie par au moins un premier lobe ou une première partie (Li).

2. Procédé de fabrication d'un phare de véhicule (4) selon la revendication 1, dans lequel le procédé comprend l'étape d'acheminement d'au moins une partie supplémentaire ou un second lobe (L2) du rayonnement laser venant de la sortie (60) du premier guide de lumière (52), vers le second guide de lumière (64) du corps lenticulaire (24), de façon à suivre un chemin alternatif en comparaison de la première partie (L1) du rayonnement laser en lien avec le premier lobe (L1), dans lequel le second lobe (L2) percute la surface de soudage (48).

3. Procédé de fabrication d'un phare de véhicule (4) selon la revendication 1 ou 2, dans lequel le faisceau de lumière distribué au niveau de la sortie (60) du premier guide de lumière (52) comprend une pluralité de lobes (Li), acheminés vers le second guide de lumière (64) du corps lenticulaire (24), lesdits lobes (Ln) ayant un niveau « n », où « n » est le nombre de réflexions affectant le lobe en passant à travers le second guide de lumière (64) du corps lenticulaire (24) avant de percuter la surface de soudage (48).

4. Procédé de fabrication d'un phare de véhicule (4) selon la revendication 1, 2 ou 3, dans lequel le procédé comprend l'étape de fabrication d'au moins un lobe (L0) ayant un niveau « 0 » qui percute la surface de soudage (24) en passant à travers le corps lenticulaire (24) sans être soumis aux réflexions à l'intérieur du second guide de lumière (64).

5. Procédé de fabrication d'un phare de véhicule (4) selon la revendication 3 ou 4, dans lequel le procédé comprend l'étape de fabrication d'au moins deux lobes (L0) ayant des niveaux différents, qui percutent la surface de soudage (24) en passant à travers le corps lenticulaire (24) soumis à un nombre différent de réflexions à l'intérieur du second guide de lumière (64).

6. Procédé de fabrication d'un phare de véhicule (4) selon l'une quelconque des revendications précédentes, dans lequel le premier guide de lumière (52) et le second guide de lumière (64) sont alignés le long d'une direction identique (X-X).

7. Procédé de fabrication d'un phare de véhicule (4) selon l'une quelconque des revendications 1 à 5, dans lequel le premier guide de lumière (52) et le second guide de lumière (64) du corps lenticulaire (24) sont orientés de façon à être inclinés l'un par rapport à l'autre selon une première et une seconde direction (X-X, Y-Y).

8. Procédé de fabrication d'un phare de véhicule (4) selon l'une quelconque des revendications précédentes, dans lequel le dispositif d'émission laser (30) est connecté au premier guide de lumière (52) au moyen d'un faisceau de fibre optique (32), lesdites fibres optiques (32) étant fixées à un support ou une matrice (33).

9. Procédé de fabrication d'un phare de véhicule (4) selon l'une quelconque des revendications précédentes, dans lequel le premier guide de lumière (52) comprend au moins une paire de parois (68) se faisant face l'une l'autre et inclinées dans le sens inverse par rapport à un axe optique (X-X) du premier guide de lumière (52), de façon à définir un compartiment (42) commençant avec l'entrée (56) et finissant avec ladite sortie (60) pour la propagation du faisceau de lumière dans des lobes (Li).

10. Procédé de fabrication d'un phare de véhicule (4) selon la revendication 9, dans lequel ledit compartiment (42) est creux et lesdites parois (68) se réfléchissent par rapport au faisceau de lumière qui les percute.

11. Procédé de fabrication d'un phare de véhicule (4) selon l'une quelconque des revendications 1 à 8, dans lequel le premier guide de lumière (52) comprend un corps solide adapté pour remplir la condition de réflexion interne globale pour l'au moins une partie du rayonnement laser (Li), avec le corps solide s'étendant à partir de ladite entrée (56) vers ladite sortie (60).

12. Procédé de fabrication d'un phare de véhicule (4) selon l'une quelconque des revendications précédentes, dans lequel le premier guide de lumière (52) est mis en forme et placé de façon à disposer une sortie (60) à proximité du et/ou sensiblement en contact avec le corps lenticulaire (24).

13. Procédé de fabrication d'un phare de véhicule (4) selon l'une quelconque des revendications précédentes, dans lequel ladite sortie (60) est au moins partiellement de forme contraire par rapport à la partie correspondante du corps lenticulaire (24) avec lequel elle est disposée à proximité et/ou sensiblement en contact.

14. Procédé de fabrication d'un phare de véhicule (4) selon l'une quelconque des revendications précédentes, dans lequel l'orientation réciproque entre le premier guide de lumière (52) du rayonnement laser et le second guide de lumière (64) du corps lenticulaire (24) est déterminée en suivant à rebours le chemin d'un faisceau de rayonnement laser appartenant à un lobe déterminé (Li) de la distribution spatiale destinée pour se propager à l'intérieur du second guide de lumière (64) du corps lenticulaire (24).

15. Procédé de fabrication d'un phare de véhicule (4) selon la revendication 14, dans lequel ladite orientation réciproque est obtenue en commençant à partir de l'interface de soudage (48), selon les étapes suivantes :
- remonter le chemin du faisceau de rayonnement laser du lobe (Li) de la distribution spatiale destiné à être propagé jusqu'à ce que soit trouvée une première paroi du second guide de lumière (64), dans lequel la condition de la réflexion interne globale du faisceau de rayonnement laser lui-même peut être remplie,
- déterminer le faisceau réfléchi par la paroi trouvée rencontrant la réflexion interne globale, jusqu'à ce que soit rencontrée une zone d'entrée (72) du rayonnement laser, qui s'étend sur une première face du corps lenticulaire (24) faisant face directement au premier guide de lumière (52) pouvant être associée.

16. Procédé de fabrication d'un phare de véhicule (4) selon l'une quelconque des revendications 14 à 15, dans lequel ledit procédé comprend en outre les étapes suivantes :
- rétrocalculer la réfraction subie par le faisceau de rayonnement laser lorsque le matériau à partir duquel le corps lenticulaire (24) est fait passe à travers l'air, de façon à identifier la direction du faisceau de rayonnement laser provenant de la sortie du premier guide de lumière (52),
- dans lequel une telle direction détermine le positionnement du premier guide de lumière (52) par rapport au corps lenticulaire (24), plaçant l'axe (X-X) du premier guide de lumière (52) dans une même direction que celle du faisceau de rayonnement laser rétrocalculé au niveau de la sortie du second guide de lumière (64).

17. Procédé de fabrication d'un phare de véhicule (4) selon l'une quelconque des revendications 14 à 16, dans lequel le calcul de l'orientation réciproque prévoit l'étape d'estimation d'une déviation possible affectant le faisceau de rayonnement laser en raison d'une quelconque discontinuité de surface du corps lenticulaire (24), et/ou l'étape d'estimation de l'annulation d'une telle discontinuité, à nouveau pour déterminer la direction exacte du faisceau de rayonnement laser.
